Europäisches Patentamt

**European Patent Office**

**Office européen des brevets**

(19)

(11) Veröffentlichungsnummer : **0 117 318**
**B1**

(12)  # EUROPÄISCHE PATENTSCHRIFT

(45) Veröffentlichungstag der Patentschrift :
20.08.86

(21) Anmeldenummer : **83201736.2**

(22) Anmeldetag : **08.12.83**

(51) Int. Cl.⁴ : **C 21 B 13/00, C 21 B 13/08**

(54) **Verfahren zum kontinuierlichen Einschmelzen von Eisenschwamm.**

(30) Priorität : 10.02.83 DE 3304504

(43) Veröffentlichungstag der Anmeldung :
05.09.84 Patentblatt 84/36

(45) Bekanntmachung des Hinweises auf die Patenterteilung : 20.08.86 Patentblatt 86/34

(84) Benannte Vertragsstaaten :
AT BE DE FR GB IT LU NL

(56) Entgegenhaltungen :
EP-A- 0 036 382
EP-A- 0 079 182
DE-A- 2 723 857
DE-A- 3 133 575
FR-A- 1 429 265
FR-A- 2 257 692
FR-A- 2 490 242
GB-A- 943 267
LU-A- 35 268
LU-A- 39 142
LU-A- 74 568
US-A- 2 740 710

(73) Patentinhaber : **METALLGESELLSCHAFT AG**
**Reuterweg 14 Postfach 3724**
**D-6000 Frankfurt/M.1 (DE)**

(72) Erfinder : **Hirsch, Martin**
**Römerstrasse 7**
**D-6382 Friedrichsdorf 4 (DE)**
Erfinder : **Fischer, Peter, Dr.**
**Taunusstrasse 10**
**D-6368 Bad Vilbel-Dortelweil (DE)**
Erfinder : **Serbent, Harry, Dr.**
**Gustav-Hoch-Strasse 5 d**
**D-6450 Hanau am Main (DE)**

(74) Vertreter : **Rieger, Harald**
**Reuterweg 14**
**D-6000 Frankfurt a.M. (DE)**

## Beschreibung

Die Erfindung betrifft ein Verfahren zum kontinuierlichen Einschmelzen von Eisenschwamm in einem liegenden, langgestreckten Reaktor, wobei Eisenschwamm im mittleren Bereich des Reaktors auf die Schmelze chargiert wird, kohlenstoffhaltiger Brennstoff und hochsauerstoffhaltige Gase in die Schmelze eingeblasen werden und Schlacke und Eisenschmelze an gegenüberliegenden Enden des Reaktors abgezogen werden.

Die sogenannten Direktreduktionsverfahren erzeugen normalerweise ein Produkt, das mit « Eisenschwamm » bezeichnet wird. Es handelt sich dabei um Eisenerz, dem im festen Zustand und damit unter Beibehaltung seiner äußeren Form lediglich der im Eisenoxid gebundene Sauerstoff mit Hilfe geeigneter Reduktionsmittel weitgehend entzogen ist.

Der Eisenschwamm kann, wenn von Erzen mit ausreichend hohem Eisengehalt ausgegangen wird, bei der konventionellen Stahlerzeugung unmittelbar als Schrottersatz verwandt werden. In einigen Fällen, insbesondere bei feinkörnigem Gut und wenn längerer Transport und längere Lagerung erforderlich sind, wird der Eisenschwamm im Anschluß an die Erzeugung brikettiert.

Für die Weiterverarbeitung auf Stahl hat sich der Elektrolichtbogenofen als besonders geeignet erwiesen und sich für diesen Zweck weltweit durchgesetzt. Die notwendige elektrische Energie stellt jedoch eine hochwertige Energieform dar, die in vielen Fällen mit verhältnismäßig hohen Umwandlungsverlusten erzeugt werden muß. Sie steht auch nicht überall zu annehmbaren Bedingungen und in ausreichender Menge zur Verfügung. Ein Einschmelzverfahren, das die unmittelbare Verwendung eines Primärenergieträgers gestattet, weist demgegenüber erhebliche Vorteile auf. Ein weiterer Nachteil besteht auch in dem diskontinuierlichen Betrieb. Dieser bedeutet höheren Energieverbrauch und Anfall eines noch für andere Zwecke verwendbaren Abgases in schwankender Menge und Zusammensetzung.

Es wurde auch bereits vorgeschlagen, Eisenschwamm kontinuierlich in einem liegenden, langgestreckten Reaktor einzuschmelzen (Journal of Metals, Juni 1969, Seiten 50-56). Dabei wird der Eisenschwamm in den mittleren Bereich auf die Schmelze chargiert. Der mittlere Bereich des Reaktors ist kreisförmig und vorzugsweise als Lichtbogenofen ausgebildet, da hierbei — im Gegensatz zu einer Ausbildung mit Brennern — die Wärmezufuhr und die erforderliche Rührbewegung der Schmelze durch induktive Rührung unabhängig voneinander gesteuert werden können. Vorzugsweise wird der Kohlenstoff durch in den vorreduzierten Pellets eingebundenen, überschüssigen Kohlenstoff in den Reaktor eingebracht, es kann jedoch auch Kohlenstoff separat in die Einschmelzzone eingeblasen werden. An die runde Einschmelzzone schließt sich an einer Seite die Raffinationszone und an der anderen Seite die Schlackenreinigungszone an. In der Raffinationszone wird Sauerstoff mittels Lanzen auf die Schmelze aufgeblasen. Das Abgas des Reaktors ist reduzierend und wird deshalb zur Ausnutzung seines chemischen Reduktionspotentials in die Direktreduktion eingeleitet.

Aus der DE-AS-24 01 909 ist es bekannt, feinkörnigen Eisenschwamm, Sauerstoff und feinkörnige Kohle kontinuierlich von unten in eine Schmelze in einem tiegelförmigen Reaktor einzublasen. Das Abgas besteht fast quantitativ aus CO und wird nach einer Entstaubung zum Teil als Reduktionsgas für die Direktreduktion in einer Wirbelschicht verwendet, zum Teil als Trägergas für den Eisenschwamm und die Kohle in den Reaktor rezirkuliert und zum Teil nach einer Entstaubung nachverbrannt und als Wärmeaustauschmedium verwendet. Dieses Verfahren ist nur für den Einsatz von feinkörnigem Eisenschwamm geeignet und mit einer Direktreduktion in einer Wirbelschicht verknüpft.

Aus der DE-AS-24 01 909 ist eine ähnliche Arbeitsweise bekannt, bei der neben dem von unten in die Schmelze eingeblasenen feinkörnigen Eisenschwamm stückiger oder pelletierter Eisenschwamm auf die Oberfläche der Schmelze in den tiegelförmigen Reaktor chargiert wird.

In beiden Fällen ist die Rückführung des fast quantitativ aus CO bestehenden Abgases in die Schmelze vorgeschrieben. Von diesem Gas ist keine Reduktionswirkung zu erwarten, und es kann im wesentlichen nur die Funktion eines Trägergases für Kohle und feinkörnigen Eisenschwamm, die eines Schutzgases für die Einblasdüsen und die eines Rührmediums für die Schmelze ausüben. Als Nachteil dieser Arbeitsweise ist die notwendige Reinigung, Kühlung und Verdichtung des Gases vor dem Wiedereinsatz anzusehen. Das gekühlte Rückgas muß dann jeweils von der Schmelze wieder aufgeheizt werden und entzieht damit dem Prozeß Wärme.

Der Erfindung liegt die Aufgabe zugrunde, die Nachteile der bekannten Verfahren zu vermeiden und insbesondere ein kontinuierliches Einschmelzen von Eisenschwamm mit großem Kornspektrum unter praktisch ausschließlicher Verwendung von festen, kohlenstoffhaltigen Brennstoffen in wirtschaftlicher Weise zu ermöglichen.

Die Lösung dieser Aufgabe erfolgt erfindungsgemäß dadurch, daß der Eisenschwamm in einen mittleren Bereich von 20 bis 40 % der Gesamtlänge des Reaktors chargiert wird, in diesen Bereich von unten feinkörniger, kohlenstoffhaltiger Brennstoff und hochsauerstoffhaltige Gase in die Schmelze eingeblasen werden, die Mengen des Sauerstoffs und Kohlenstoffs so eingestellt werden, daß eine Eisenschmelze mit einem C-Gehalt von 1 bis 3 % entsteht und der restliche Teil des in der Schmelze befindlichen Kohlenstoffs in der Schmelze zu CO umgesetzt wird und der restliche Energiebedarf für das Verfahren durch praktisch vollständige Verbrennung des CO und Wasserstoffs im freien Reaktorraum oberhalb der Schmelze durch Einleiten sauerstoffhaltiger Gase in den freien Reaktorraum gedeckt wird. Der « mittlere Bereich » des Reaktors, in den der Eisenschwamm chargiert wird, muß nicht genau symmetrisch in der Mitte des Reaktors mit gleichem Abstand zu den beiden Enden des Reaktors angeordnet sein, sondern kann zu einer Seite hin verschoben sein. Der Reaktor ist zweckmäßigerweise zylindrisch ausgebildet und um seine Längsachse drehbar. Dadurch lassen sich die im Boden angeordneten Düsen für Reparaturen und Stillstandszeiten aus dem Bereich der Schmelze herausfahren. Außerdem ist diese Form für die feuerfeste Auskleidung günstig. Der grobkörnige Eisenschwamm wird von oben auf die Schmelze chargiert. Als hochsauerstoffhaltige Gase werden technisch reiner Sauerstoff oder stark sauerstoffangereicherte Luft eingeblasen. Das Einblasen des Sauerstoffs und der feinkörnigen Kohle erfolgt mittels Düsen. Die feinkörnige Kohle wird mit Hilfe von Gasen als Trägermedium eingeblasen. Zum Schutze der Düsenmundstücke gegen Abbrand werden Kohlenwasserstoffe, wie z. B. Methan, eingeblasen, die durch ihre Zersetzung die Düsenmundstücke kühlen. Dazu sind die Düsen im allgemeinen als Doppelrohr-Düsen ausgebildet. Durch die Umsetzung des festen, kohlenstoffhaltigen Brennstoffes sowie des aus den Kohlenwasserstoffen entstandenen Kohlenstoffs mit dem eingeblasenen Sauerstoff entsteht CO in der Schmelze. Dieses CO sowie Wasserstoff, der aus den Kohlenwasserstoffen und dem festen Brennstoff stammt, treten aus der Schmelze in den freien Reaktorraum. Dort werden sie durch Einleiten von sauerstoffhaltigen Gasen, die aus Luft oder hochsauerstoffhaltigen Gasen bestehen können, weitgehend zu $CO_2$ und $H_2O$ verbrannt. Der Energiebedarf des Verfahrens wird durch die Umsetzung des Kohlenstoffs in der Schmelze zu CO und die Verbrennung von CO und Wasserstoff im freien Reaktorraum gedeckt. Die Menge eingeblasenen festen Brennstoffs wird so eingestellt, daß sein Kohlenstoffgehalt — nach Abzug der zur Aufkohlung der Eisenschmelze auf einen C-Gehalt von 1 bis 3 % erforderlichen Menge — durch Umsetzung zu CO und Verbrennung zu $CO_2$ zur Deckung des Energiebedarfs ausreicht. Dabei wird die Energiemenge berücksichtigt, die durch Verbrennung des Wasserstoffs aus dem festen Brennstoff, aus den Kohlenwasserstoffen sowie durch Verbrennung des Kohlenstoffs aus den Kohlenwasserstoffen entsteht. Die Menge des eingeblasenen Sauerstoffs wird so eingestellt, daß — mit Ausnahme des für die Aufkohlung erforderlichen Kohlenstoffs — der feste Kohlenstoff in der Schmelze zu CO umgesetzt wird. Das Abgas wird aus dem Reaktor an der Seite des Schlackenabstichs abgezogen. Sein Wärmeinhalt kann für andere Zwecke, wie z. B. Trocknung oder Energieerzeugung, gut ausgenutzt werden. Eventuell erforderliche Zuschlagstoffe, wie z. B. Entschwefelungsmittel, werden ebenfalls in den mittleren Bereich chargiert. Grundsätzlich sind alle Kohlearten für das erfindungsgemäße Verfahren zu verwenden. Sie sind lediglich auf unter 3 % Nässe zu trocknen und im wesentlichen unter 1 mm zu zerkleinern. Vorzugsweise werden solche Kohlen verwendet, die geringe Gehalte an Asche und flüchtigen Bestandteilen aufweisen.

Eine vorzugsweise Ausgestaltung besteht darin, daß der Eisenschwamm in einen mittleren Bereich von 20 bis 25 % der Gesamtlänge des Reaktors chargiert wird. Dadurch ergeben sich besonders gute Ergebnisse.

Eine vorzugsweise Ausgestaltung besteht darin, daß feinkörniger Eisenschwamm mit einer Korngröße von maximal 3 mm im mittleren Bereich von unten in die Schmelze geblasen wird. Dadurch wird feinkörniger Eisenschwamm unter günstigen Bedingungen eingeschmolzen und der Anfall an Eisenschwamm im Abgas ist gering. Der feinkörnige Eisenschwamm wird mit einem Trägergas eingeblasen, das möglichst wenig Sauerstoff enthält. Eventuell wird dem Eisenschwamm Kohle zugemischt.

Eine Ausgestaltung besteht darin, daß Kohle mit dem Eisenschwamm auf die Schmelze chargiert wird. Dadurch wird eine weitere Kontrollmöglichkeit für die C-Bilanz des Verfahrens geschaffen.

Eine Ausgestaltung besteht darin, daß der Kohlenstoffgehalt der Eisenschmelze vor dem Abstich durch Auf- oder Einblasen von Sauerstoff gesenkt wird. Dadurch kann das im Reaktor erzeugte, aufgekohlte Vormetall im selben Reaktor zu Stahl verarbeitet werden.

Das erfindungsgemäße Verfahren ist schematisch in den Figuren dargestellt.

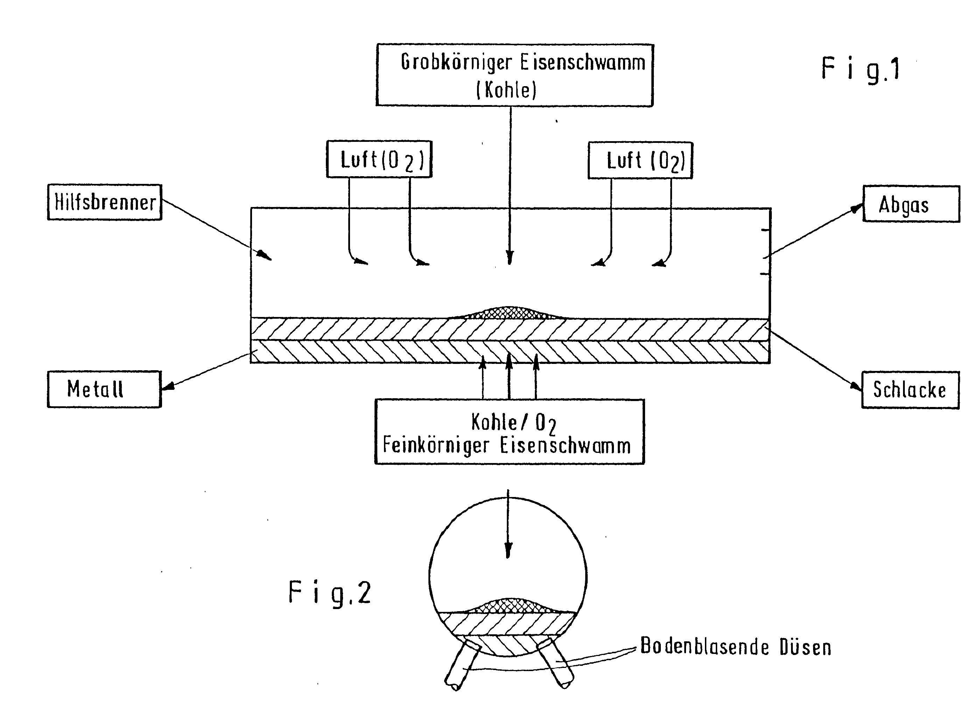

Figur 1 ist ein Längsschnitt durch einen Reaktor,

Figur 2 ist ein Querschnitt durch einen Reaktor.

Die Vorteile der Erfindung bestehen darin, daß Eisenschwamm mit einem großen Kornspektrum von feinkörnig bis grobkörnig unter ausschließlicher Verwendung und direktem Einsatz von Kohle als Primärenergie kontinuierlich in wirtschaftlicher Weise eingeschmolzen werden kann. Der Ausnutzungsgrad der Primärenergie ist sehr hoch.

**Patentansprüche**

1. Verfahren zum kontinuierlichen Einschmelzen von Eisenschwamm in einem liegenden, langgestreckten Reaktor, wobei Eisenschwamm im mittleren Bereich des Reaktors auf die Schmelze chargiert wird, kohlenstoffhaltiger Brennstoff und hochsauerstoffhaltige Gase in die Schmelze eingeblasen werden und Schlacke und Eisenschmelze an gegenüberliegenden Enden des Reaktors abgezogen werden, dadurch gekennzeichnet, daß der Eisenschwamm in einen mittleren Bereich von 20 bis 40 % der Gesamtlänge des Reaktors chargiert wird, in diesen Bereich von unten feinkörniger, kohlenstoffhaltiger Brennstoff und hochsauerstoffhaltige Gase in die Schmelze eingeblasen werden, die Mengen des Sauerstoffs und Kohlenstoffs so eingestellt werden, daß eine Eisenschmelze mit einem C-Gehalt von 1 bis 3 % entsteht und der restliche Teil des in der Schmelze befindlichen Kohlenstoffs in der Schmelze zu CO umgesetzt wird und der restliche Energiebedarf für das Verfahren durch praktisch vollständige Verbrennung des CO und Wasserstoffs im freien Reaktorraum oberhalb der Schmelze durch Einleiten sauerstoffhaltiger Gase in den freien Reaktorraum gedeckt wird.

2. Verfahren nach Anspruch 1, dadurch gekennzeichnet, daß der Eisenschwamm in einen mittleren Bereich von 20 bis 25 % der Gesamtlänge des Reaktors chargiert wird.

3. Verfahren nach Anspruch 1 oder 2, dadurch gekennzeichnet, daß feinkörniger Eisenschwamm mit einer Korngröße von maximal 3 mm im mittleren Bereich von unten in die Schmelze geblasen wird.

4. Verfahren nach einem der Ansprüche 1 bis 3, dadurch gekennzeichnet, daß Kohle mit dem Eisenschwamm auf die Schmelze chargiert wird.

5. Verfahren nach einem der Ansprüche 1 bis 4, dadurch gekennzeichnet, daß der Kohlenstoffgehalt der Eisenschmelze vor dem Abstich durch Auf- oder Einblasen von Sauerstoff gesenkt wird.

**Claims**

1. A continuous process of melting sponge iron in an elongated horizontal reactor, wherein sponge iron is charged onto the molten material in an intermediate region of the reactor, carbonaceous fuel and high-oxygen gases are blown into the molten material, and slag and molten iron are tapped at opposite ends of the reactor, characterized in that the sponge iron is charged into the reactor in an intermediate region of 20 to 40 % of the total length of the reactor, fine-grained carbonaceous fuel and high-oxygen gas are blown into the molten material from below in that region, the rates of oxygen and carbon are so controlled that a carbon containing liquid iron containing 1 to 3 % carbon is produced, the remaining carbon contained in the molten material is reacted in the melt to produce CO, and the remaining energy required in the process is produced in that the CO and hydrogen are virtually completely burnt above the molten material as a result of a supply of oxygen-containing gases into the free space of the reactor.

2. A process according to claim 1, characterized in that the sponge iron is charged into an intermediate region of 20 to 25 % of the total length of the reactor.

3. A process according to claim 1 or 2, characterized in that fine-grained sponge iron having a particle size up to 3 mm is blown into the molten material from below in the intermediate region.

4. A process according to any of claims 1 to 3, characterized in that coal is charged onto the molten material together with the sponge iron.

5. A process according to any of claims 1 to 4, characterized in that oxygen is blown onto or into the liquid carbon containing iron to reduce its carbon content before the molten iron is tapped.

**Revendications**

1. Procédé de fusion d'éponge de fer en continu dans un réacteur horizontal de grande longueur, qui consiste à charger l'éponge de fer sur la masse en fusion, dans la région médiane du réacteur et à insuffler dans la masse en fusion du combustible contenant du carbone et des gaz à teneur élevée en oxygène, et à soutirer le laitier et le fer fondu à des extrémités opposées du réacteur, caractérisé en ce qu'il consiste à charger l'éponge de fer dans une région médiane représentant de 20 à 40 % de la longueur totale du réacteur, à insuffler dans cette région, dans la masse fondue, par le bas, du combustible à grains fins et contenant du carbone et des gaz à teneur élevée en oxygène, à régler les quantités d'oxygène et de carbone de manière à produire du fer fondu ayant une teneur en carbone de 1 à 3 %, et à transformer dans la masse fondue en CO la partie restante du carbone se trouvant dans la masse fondue, et à couvrir le reste des besoins en énergie du procédé par combustion pratiquement complète du CO et de l'hydrogène dans l'espace libre du réacteur au-dessus de la masse fondue, en envoyant des gaz contenant de l'oxygène dans l'espace libre du réacteur.

2. Procédé suivant la revendication 1, caractérisé en ce qu'il consiste à charger l'éponge de fer dans une région médiane représentant de 20 à 25 % de la longueur totale du réacteur.

3. Procédé suivant la revendication 1 ou 2, caractérisé en ce qu'il consiste à insuffler dans la région moyenne, par le bas, dans la masse fondue, de l'éponge de fer à grains fins ayant une granulométrie de 3 mm au maximum.

4. Procédé suivant l'une des revendications 1 à 3, caractérisé en ce qu'il consiste à charger du charbon avec l'éponge de fer sur la masse fondue.

5. Procédé selon l'une des revendications 1 à 4, caractérisé en ce qu'il consiste à diminuer la teneur en carbone de fer fondu avant la coulée, en y soufflant ou en y insufflant de l'oxygène.

Grobkörniger Eisenschwamm
(Kohle)

Fig.1

Luft($O_2$)     Luft ($O_2$)

Hilfsbrenner

Abgas

Metall

Schlacke

Kohle/$O_2$
Feinkörniger Eisenschwamm

Fig.2

Bodenblasende Düsen

0 117 318